Europäisches Patentamt

European Patent Office

Office européen des brevets

(11) Publication number: **0 081 286**
**B1**

# EUROPEAN PATENT SPECIFICATION

(45) Date of publication of patent specification: **12.12.84**

(51) Int. Cl.³: **A 47 J 43/046**

(21) Application number: **82305320.2**

(22) Date of filing: **06.10.82**

(54) Improvements in food processor.

(30) Priority: **30.11.81 AU 1755/81**

(43) Date of publication of application:
**15.06.83 Bulletin 83/24**

(45) Publication of the grant of the patent:
**12.12.84 Bulletin 84/50**

(84) Designated Contracting States:
**AT BE CH DE FR GB IT LI LU NL SE**

(56) References cited:
**EP-A-0 004 908**
**CH-A- 263 604**
**DE-C- 937 627**
**FR-A-1 175 583**
**FR-A-1 394 972**
**GB-A-1 380 318**
**GB-A-2 029 199**

(73) Proprietor: **BREVILLE HOLDINGS PTY. LIMITED**
**45, Murray Street**
**Pyrmont New South Wales (AU)**

(72) Inventor: **McClean, John William**
**5, Beverley Crescent**
**Lakemba New South Wales (AU)**

(74) Representative: **Gordon, Richard John Albert et al**
**F.J. CLEVELAND & COMPANY 40-43, Chancery Lane**
**London WC2A 1JQ (GB)**

## Description

The present invention relates to food processors.

Food processors for domestic use are well known and generally each comprise a housing having an aperture in an upper portion thereof, a substantially cylindrical container adapted to be attached to the housing, the container having an upwardly inwardly directed sleeve, a lid adapted to co-operate with the container to close the container, a motor contained in the housing and having a drive shaft extending upwardly through the aperture in the housing and through the sleeve of the container and a tool connected to an upper end portion of the shaft remote from the motor, the tool having upper and lower blades extending radially of the container, the lower blade being contained in a plane extending substantially parallel to and adjacent a base of the container and the upper blade being contained in a plane substantially parallel to and above the plane containing the lower blade, the arrangement being such that, on rotation of the shaft on a central longitudinal axis thereof, the blades rotate in the container about said axis and process articles contained in the container.

While there are many food processors of the kind set forth on the market the prototype of all food processors of this kind is illustrated in British patent specification 1,380,318 in the name of Pierre Verdun.

The introduction of the Verdun type food processor onto the market in the early 1970s represented a substantial departure from previous practice in connection with domestic food processing machines. While machines were available which, with a number of attachments could perform a variety of tasks such as mixing, blending, grating, grinding, chopping, whipping etc. and which were specially adapted for domestic use as against commercial use, they performed these tasks only with the aid of a wide variety of different attachments. The popularity of the Verdun type food processor is attributable to the fact that a wide range of operations can be performed in the same container with only simple changes of tool for different functions. Generally speaking also the Verdun type food processor performed the processing operations very much more quickly than existing machines.

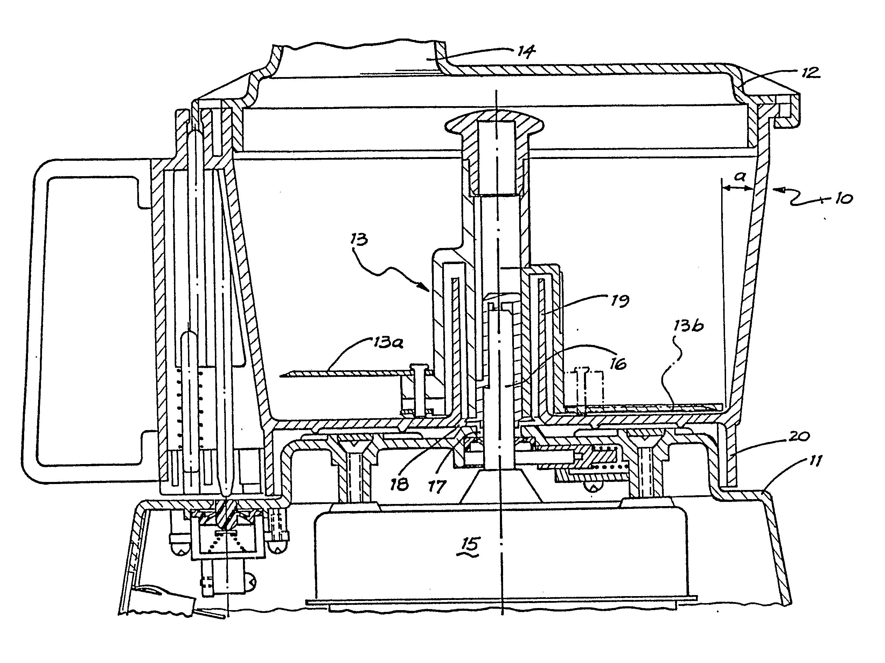

All food processing machines of the kind with which the invention is concerned at present on the market have adopted the basic design of the Verdun machine with but few changes. A particular feature of that machine which is clearly seen in Figure 2 of the abovementioned British patent specification is that the container in which food processing takes place is a right cylinder in which the cylinder wall is at right angles to the bottom. This is a feature that is found in all food processors derived from the Verdun design. In many cases the angle between the cylindrical wall and the base is made very slightly greater than 90° simply for the purpose of facilitating removal of the container from the mould in which it is made. Such divergencies from 90° as there have been have been quite insignificant so far as the operation of the machine is concerned.

The ultimate cost of a food process of the kind set forth to the purchaser is to a considerable extent, governed by the size of the electric motor, the larger the motor the greater the cost. Thus for a food processor having a container of a given size, if it can be made to process a larger than normal quantity of foodstuff with the same electric motor or a normal quantity with a smaller electric motor, useful reductions in cost can be made in terms of a given capacity for food processing.

The present invention is based on the surprising discovery that by using a container with an outwardly tapering side wall according to the characterizing part of Claim 1 a significant increase in food processing capacity for a given motor size can be achieved. It was found that in an experimental food processor, by giving the container an outward taper from top to bottom of 7 1/2° the meat chopping capacity could at least be doubled and a similar increase in the capacity of forming dough achieved. For example whereas a similar food processor of conventional construction had a capacity for grinding about 250 grams of meat the same processor with an outwardly tapering container as described above was found to be capable of processing between 500 and 750 grams of meat.

The use of tapered containers in some forms of food preparation apparatus, for example those known as "liquidisers" is well known. Such devices operate on a principle somewhat different from food processors of the kind set forth and are capable of use for specific purposes only. As pointed out above the accepted wisdom in the art is that the containers of food processors of the kind set forth shall be right cylinders.

Apart from the use of a tapered containers in "liquidisers French patent specifications Nos. 1,394,972 and 1,175,583 and German patent specification No. 937,627 describe and illustrate different types of food treating machines utilising a tapered container. These are however not food processesing machines of the kind with which the present invention is concerned, in that they do not include an upwardly inwardly directed sleeve, thus in these cases the container cannot be removed from its base with the food stuff being treated in position in the container. There is no indication in these specifications of the reason for the choice of a tapered container nor any indication that the use of such a container conferred any special advantages.

The specification of Swiss patent 263,604 illustrates the use of a tapered container together with an upwardly inwardly directed sleeve. The apparatus described however does not show the use of blades rotating in the container and it is evident that the inventor had not appreciated the possibility that a process such as the mincing of meat could be carried out by means of a blade rotating in the container, in that, in Fig. 4 a separate meat mincing device is shown arranged above the container. No indication is given in the specification as to the reasons for the choice of a tapered container.

All the specifications referred to above were published for the filing of the application that led to the grant of British patent 1,380,318 and had it been apparent to a person skilled in the art that an advantage of the magnitude obtained by the present invention were obtainable from the use of a tapered container such a container would have been used by the inventor of the abovementioned British patent and by the many manufacturers that have copied more or less slavishly the construction shown in that specification.

It is believed, although it has not been scientifically established that the advantages of the present invention stem from the fact that, with the arrangement of blades used there is a greater vertical transport of ingredients and thus greater efficiency and a more uniform product in a container with outwardly sloping walls in the area in which the blades operate.

The angle of taper ('a' of Fig. 1) measured between the wall of the container and a line parallel to the central axis thereof is between 5° and 20° and is preferably about 7 1/2°.

In order that the nature of the invention may be better understood a preferred form thereof is hereinafter described by way of example with reference to the accompanying drawing which shows a cross-sectional view of a food processor according to the invention.

In the drawing a container having a flat bottom and straight wall tapering outwardly of an angle 'a' of about 7 1/2° is shown at 10. This is attached to the base 11 of the food processor in a conventional manner and is provided with a lid 12 also of conventional construction. As shown in the drawing the container has in it a chopping tool 13 to which food to be chopped is offered through the entry tube 14 in the lid 12. It is to be noted that if the container 10 is constructed so that the smaller diameter is approximately equal to the diameter of a food processor of conventional size then the tapered wall will provide a larger diameter at its open end which, apart from an increase in volumetric capacity of the container also has the advantages in that the diameter of the tube 14 can be made larger thus allowing larger portions of food to be offered to the tool 13.

The chopping tool 13 includes cutting blades 13a and 13b projecting radially from a central support to points adjacent the container wall the upper blade 13a being of slightly greater length than the lower blade 13b to take account of the outwardly tapering form of the container wall.

Within the base 11 is the usual driving motor 15 having a driving shaft 16 projecting through a hole 17 in the top of the base 11. The chopping tool 13 is removably mounted on the driving shaft 16. The container 10 has a hole 18 in its bottom which is surrounded by the sleeve 19. A skirt 20 on the container 10 surrounds the upper part of the base 11 and is a press fit on it. The other features of construction shown in the drawing are of a conventional nature and are not relevant to an understanding of the present invention.

A taper of 7 1/2° was found by experiment to give optimum results. A taper of less than about 5° does not give results sufficiently advantageous to make its adoption worthwhile. A taper greater than 20° gives rise to problems in the construction and operation of the food processor. The best results were obtained with a container having a substantially flat bottom and a frusto-conical wall making an obtuse angle with the bottom.

## Claims

1. A food processor comprising a housing (11) having an aperture (17) in an upper portion thereof, a substantially cylindrical container (10) adapted to be attached to the housing (11), the container having an upwardly inwardly directed sleeve (19), a lid (12) adapted to co-operate with the container (10) to close the container, a motor (15) contained in the housing (11) and having a drive shaft (16) extending upwardly through the aperture (17) in the housing (11) and through the sleeve (19) of the container (10) and a tool (13) connected to an upper end portion of the shaft (16) remote from the motor (15), the tool (13) having upper and lower blades (13a, 13b) extending radially of the container (10), the lower blade (13b) being contained in a plane extending substantially parallel to and adjacent a base of the container (10) and the upper blade (13a) being contained in a plane extending substantially parallel to and above the plane containing the lower blade (13b), the arrangement being such that, on rotation of the shaft (16) on a central longitudinal axis thereof, the blades (13a, 13b) rotate in the container (10) about the said axis and process articles contained in the container characterized in that the container (1) comprises a circumferential wall which, in a plane containing the said axis, extends upwardly and outwardly at an angle of 5° to 20° to an axis extending parallel to said axis of at least over a portion of the axial length of the container (1) in which the blades (13a, 13b) operate and in that the upper blade (13a) extends radially outwardly from the said axis beyond the lower blade (13b).

2. A food processor as claimed in Claim 1 wherein the said angle is 7.5°.

**Patentansprüche**

1. Küchenmaschine mit einem Gehäuse (11), das eine Öffnung (17) in einem oberen Teil davon hat, einem im wesentlichen zylindrischen Gefäß zum Befestigen an dem Gehäuse (11), welches Gefäß eine nach oben und nach innen gerichtete Hülse (19) hat, einem Deckel (12) zum Zusammenarbeiten mit dem Gefäß (10) zum Schließen des Gefäßes, einem Motor (15), der in dem Gehäuse (11) enthalten ist und eine Antriebswelle (16) hat, die sich nach oben durch die Öffnung (17) in dem Gehäuse (11) und durch die Hülse (19) des Gefäßes (10) erstreckt, und einem Werkzeug (13), das mit einem oberen Endteil der Welle (16) fern vom Motor (15) verbunden ist, welches Werkzeug (13) obere und untere Messer (13a, 13b) hat, die sich radial zu dem Gefäß (10) erstrecken, wobei das untere Messer (13b) in einer Ebene enthalten ist, die sich im wesentlichen parallel zu und neben einem Boden des Gefäßes (10) erstreckt, und das obere Messer (13a) in einer Ebene enthalten ist, die sich im wesentlichen parallel zu und über der das untere Messer (13b) enthaltenden Ebene erstreckt, wobei die Anordnung derart ist, daß bei Drehung der Welle (16) um eine mittlere Längsachse davon die Messer (13a, 13b) sich in dem Gefäß (10) um diese Achse drehen und in dem Gefäß enthaltene Gegenstände verarbeiten, dadurch gekennzeichnet, daß das Gefäß (1) eine Umfangswand aufweist, die sich in einer diese Achse enthaltenden Ebene nach oben und nach außen unter einem Winkel von 5° bis 20° zu einer parallel zu dieser Achse verlaufenden Achse zumindest über einen Teil der axialen Länge des Gefäßes (1) erstreckt, in welchem die Messer (13a, 13b) arbeiten, und daß das obere Messer (13a) sich von der besagten Achse aus radial nach außen über das untere Messer (13b) hinaus erstreckt.

2. Küchenmaschine nach Anspruch 1, wobei der Winkel 7,5° beträgt.

**Revendications**

1. Robot de cuisine pour produits alimentaires comprenant un boîtier (11) comportant une ouverture (17) dans sa partie supérieure, un récipient en substance cylindrique (10) propre à être attaché au boîtier (11), le récipient comportant une douille interne orientée vers le haut (19), un couvercle (12) propre à coopérer avec le récipient (10) pour fermer ce récipient, un moteur (15) contenu dans le boîtier (11) et comportant un arbre d'entraînement (16) qui s'étend vers le haut à travers l'ouverture (17) du boîtier (11) et à travers la douille (19) du récipient (10) et un outil (13) relié à une partie d'extrémité supérieure de l'arbre (16) éloignée du moteur (15), l'outil (13) comportant des lames supérieure et inférieure (13a, 13b) qui s'étendent radialement par rapport au récipient (10) la lame inférieure (13b) étant située dans un plan en substance parallèle à un fond du récipient (10) et adjacent à celui-ci et la lame supérieure (13a) étant située dans un plan en substance parallèle au plan contenant la lame inférieure (13) et au-dessus de celui-ci, l'agencement étant tel que, lorsque l'arbre (16) tourne autour de son axe longitudinal central, les lames (13a, 13b) tournent dans le récipient (10) autour de cet axe et traitent des produits contenus dans le récipient, caractérisé en ce que le récipient (10) comprend une paroi circonférentiellel qui, dans un plan passant par le dit axe, s'étend vers le haut et vers l'extérieur sous un angle de 5 à 20° par rapport à un axe parallèle au dit axe sur au moins une partie de la longueur axiale du récipient (10) dans lequel les lames (13a, 13b) fonctionnent et la lame supérieure (13a) s'étend radialement vers l'extérieur à partir de cet axe au-delà de la lame inférieure (13b).

2. Robot de cuisine pour produits alimentaires suivant la revendication 1, dans lequel le dit angle et de 7,5°.

0081 286